# EUROPÄISCHE PATENTSCHRIFT

(11) **EP 1 570 726 B1**
(45) Veröffentlichungstag und Bekanntmachung des Hinweises auf die Patenterteilung: **03.10.2007**
(21) Anmeldenummer: 05101441.3
(22) Anmeldetag: 25.02.2005
(51) Int. Cl.: A01F 12/40, A01D 41/12

(54) **Mähdrescher mit Schleuderelementen zur Abgabe von Erntegutresten, die mit variabler Geschwindigkeit antreibbar sind**
Combine with rotative elements for delivering crop rests, the elements being driven with independent speeds
Moissoneuse-batteuse et éléments de rotation pour décharger des restes de produits de récolte, les élements étant entraînés avec des vitesses indépendantes

(30) Priorität: 04.03.2004 US 793052
(43) Veröffentlichungstag der Anmeldung: 07.09.2005
(73) Patentinhaber: DEERE & COMPANY, Moline, Illinois 61265-8098 (US)
(72) Erfinder: Pearson, Mark Leonard, 52753, Le Claire (US); Mackin, Ryan Patrick, 61264, Milan (US)
(74) Vertreter: Holst, Sönke

(56) Entgegenhaltungen:
- US-A- 4 617 942
- US-A- 4 684 068
- US-A- 5 569 081
- US-A- 5 797 793
- US-A1- 2003 162 576

## Beschreibung

Die Erfindung betrifft einen Mähdrescher mit einem Erntevorsatz zum Aufnehmen von Erntegut von einem Feld, Dresch- und Trennzusammenbauten, die im aufgenommenen Erntegut enthaltenes Korn von Erntegutresten trennen, einem mit veränderbarer Geschwindigkeit in Drehung versetzbaren rechten Schleuderelement, das eingerichtet ist, Erntegutreste zu erhalten und mit einer von seiner Drehgeschwindigkeit abhängigen Weite an der in Fahrtrichtung rechten Seite des Mähdreschers auf das Feld abzugeben, und mit einem mit veränderbarer Geschwindigkeit in Drehung versetzbaren linken Schleuderelement, das eingerichtet ist, Erntegutreste zu erhalten und mit einer von seiner Drehgeschwindigkeit abhängigen Weite an der in Fahrtrichtung linken Seite des Mähdreschers auf das Feld abzugeben, wobei die Drehgeschwindigkeiten der Schleuderelemente durch einen Steuerzusammenbau getrennt einstellbar sind.

Mähdrescher sind große landwirtschaftliche Maschinen, die beim Kornanbau zur Ernte unterschiedlicher Pflanzen von einem Feld verwendet werden. Mähdrescher sind typischer Weise selbstfahrend, manche werden aber durch einen Traktor gezogen und mit Leistung versorgt. Wenn sich der Mähdrescher bei der Ernte über ein Feld bewegt, wird reifes Erntegut durch einen Erntevorsatz an der Vorderseite des Mähdreschers abgeschnitten. Das Erntegut wird dann in Dresch- und Trennzusammenbauten innerhalb des Mähdreschers verbracht, wo Korn vom verbleibenden Pflanzenmaterial getrennt wird. Das von Korn verschiedene Restmaterial (Stroh und Spreu) wird an der Rückseite des Mähdreschers ausgestoßen.

Ein Verteiler des Schleuderelement-Typs ist ein an der Rückseite des Mähdreschers angebrachter Zusammenbau, der eingerichtet ist, vom Mähdrescher ausgestoßenes Restmaterial aufzunehmen und über eine breite Bodenfläche hinter dem Mähdrescher auszustreuen. Der Verteiler umfasst typischer Weise ein linkes Schleuderelement und ein rechtes Schleuderelement, die auf parallelen Achsen gegensinnig rotieren. Im Allgemeinen wird die Verteilung des Restmaterials auf der rechten Seite des Mähdreschers dem rechten Schleuderelement zugeschrieben und analog wird die Verteilung des Restmaterials auf der linken Seite des Mähdreschers dem linken Schleuderelement zugeschrieben. Die Gesamtweite der Verteilung des Restmaterials durch die Verteiler hängt stark von der Drehgeschwindigkeit der Schleuderelemente ab. Je höher die Drehgeschwindigkeit der Schleuderelemente ist, umso größer ist auch die resultierende Verteilbreite.

Wenn von Korn verschiedenes Restmaterial durch einen Verteiler ausgestreut wird, ist es wünschenswert, dass es nur den Bereich überdeckt, den der Mähdrescher gerade abgeerntet hat. Äußere Bedingungen, wie Seitenwind und Seitenhangneigungen können bewirken, dass das Restmaterial auf nicht abgeerntetes Gelände gelangt. Außerdem können die Erntegutbedingungen, wie Erntegutart und Feuchtigkeit, die Verteilbreite beeinflussen.

Die DE 197 34 231 A beschreibt einen Mähdrescher mit einer Axialtrenneinrichtung, an deren beiden Seiten jeweils ein Strohhäcksler angeordnet ist, der die Erntegutreste zur Seite hin abgibt. Die Strohhäcksler sind durch ein umschaltbares Getriebe mit einer höheren Geschwindigkeit antreibbar, um die Erntegutreste auf dem Feld zu verteilen, und mit einer niedrigen Geschwindigkeit betreibbar, um ein Erntegutresteschwad abzulegen. Eine feinere Kontrolle der Geschwindigkeit der Strohhäcksler und damit der Auswurfweite ist nicht vorgesehen.

In der US 4 684 068 A wird ein Mähdrescher mit zwei auswurfseitigen Schleuderelementen beschrieben. Die Geschwindigkeit eines der Schleuderelemente kann durch Auswahl der Riemenscheibe, um die ein antreibender Riemen umläuft, variiert werden. Das andere Schleuderelement wird von der Welle des ersten Schleuderelements her angetrieben, wobei das Übersetzungsverhältnis und demnach das Geschwindigkeitsverhältnis der Schleuderelemente durch Umlegen eines Riemens wählbar ist.

Die als gattungsbildend angesehene US 5 797 793 A beschreibt einen Resteverteiler für einen Mähdrescher mit zwei seitlich nebeneinander angeordneten Schleuderelementen, bei dem die Geschwindigkeiten der Schleuderelemente durch einen Bediener separat einstellbar sind.

Die DE 44 19 421 A und die prioritäts- und offenbarungsgleiche US 5 569 081 A schlagen eine Verteileinrichtung für einen Strohhäcksler eines Mähdreschers vor, bei der die stromab des Strohhäckslers angeordneten Leitbleche in Abhängigkeit von der gemessenen Windrichtung und Windstärke verstellt werden. Alternativ wird die Auswurfrichtung durch einen optischen Sensor erfasst, anhand dessen Signals die Leitbleche gesteuert werden. Analoge Steuerungen der Leitbleche anhand der Windrichtung wurden in der DE 197 05 843 A, anhand der Hangneigung in der DE 41 34 136 A und anhand einer Information über die Seite, auf der sich der noch stehende Bestand befindet, in der DE 101 34 141 A beschrieben.

Die DE 198 35 487 A beschreibt einen Schleuderdüngerstreuer, bei dem die Geschwindigkeit der Schleuderscheiben anhand von positionsspezifischen Daten über die auszubringende Menge und über die Kontur des Felds selbsttätig gesteuert wird.

Das der Erfindung zu Grunde liegende Problem wird darin gesehen, einen verbesserten Antrieb für ein Schleuderelement eines Mähdreschers bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung stellt ein effektives Mittel zur Aufrechterhaltung einer konstanten Verteilbreite und eines gleichbleibenden Schwerpunkts der Verteilung des Schleuderelements bereit, indem die Drehgeschwindigkeiten der Schleuderelemente separat durch einen Steuerzusammenbau kontrolliert werden. Bei einer Ausführungsform werden die Drehgeschwindigkeiten der Schleuderelemente selbsttätig variiert, um die gewünschte Verteilbreite und den gewünschten Schwerpunkt der Verteilung durch eine Steuerung aufrecht zu erhalten, die die Kanten der Verteilung direkt überwacht. Bei einer anderen Ausführungsform werden die Drehgeschwindigkeiten der Schleuderelemente automatisch durch ein Kontrollsystem variiert, das Umgebungsbedingungen überwacht. Der Sollwert der Verteilbreite ist durch Sensoren zur Erfassung der Schnittbreite des Erntevorsatzes erfassbar oder durch Kommunikation zwischen der Steuerung und dem Erntevorsatz feststellbar.

In den Zeichnungen sind drei nachfolgend näher beschriebene Ausführungsbeispiele dargestellt. Es zeigt:
- Fig. 1: eine seitliche Ansicht eines landwirtschaftlichen Mähdreschers mit einem Verteiler in Form eines Schleuderelementes,
- Fig. 2: eine Draufsicht auf den Mähdrescher mit einem Verteiler in Form eines Schleuderelementes,
- Fig. 3: eine Draufsicht auf den Mähdrescher mit einem Verteiler, der das Restmaterial zwischen der linken und rechten Kante der Schnittbreite des Erntevorsatzes des Mähdreschers verteilt,
- Fig. 4: eine Draufsicht auf den Mähdrescher mit einer der Schnittbreite des Erntevorsatzes entsprechenden Verteilbreite des Verteilers, der einem von rechts eintreffenden Seitenwind ausgesetzt ist,
- Fig. 5: eine Draufsicht auf den Mähdrescher mit einer Verteilbreite, die geringer als die Schnittbreite des Erntevorsatzes ist,
- Fig. 6: eine Draufsicht auf den Mähdrescher mit einer Verteilbreite, die größer als die Schnittbreite des Erntevorsatzes ist,
- Fig. 7: eine schematische Ansicht einer nicht unter den Anspruch 1 fallenden Ausführungsform, bei der die jeweiligen Drehgeschwindigkeiten der Schleuderelemente manuell durch einen Bediener verstellt werden,
- Fig. 8: eine schematische Ansicht einer geänderten, nicht unter den Anspruch 1 fallenden Ausführungsform, in der die Durchschnittsgeschwindigkeit der Schleuderelemente und ihre Differenz durch einen Bediener manuell variiert werden,
- Fig. 9: eine schematische Ansicht einer Ausführungsform der vorliegenden Erfindung, in der die Drehgeschwindigkeiten der Schleuderelemente automatisch durch ein Kontrollsystem verändert werden, das die Streubreite direkt überwacht, und
- Fig. 10: eine schematische Ansicht einer Ausführungsform der vorliegenden Erfindung, bei der die Drehgeschwindigkeiten der Schleuderelemente automatisch durch ein Kontrollsystem verstellt werden, das die Umgebungsbedingungen überwacht.

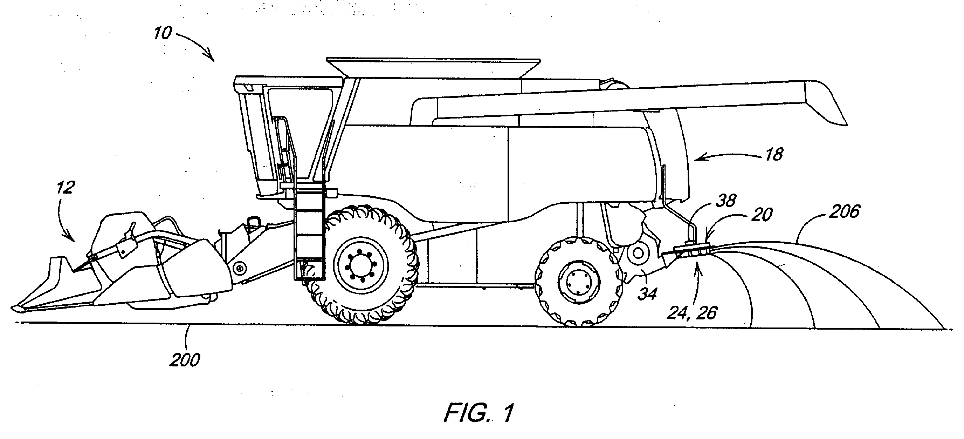

Die Figur 1 zeigt einen selbstfahrenden Mähdrescher 10, der üblicher Weise beim Getreideanbau zur Ernte einer Vielzahl unterschiedlicher Erntegüter von einem Feld 200 verwendet wird. Mähdrescher 10 sind normalerweise selbstfahrend, aber manche werden von Traktoren gezogen und angetrieben. Wenn sich der Mähdrescher 10 während des Erntebetriebs über ein Feld 200 bewegt, wird reifes Erntegut 202 durch einen Erntevorsatz 12 an der Vorderseite des Mähdreschers 10 vom Feld 200 abgeschnitten. Das Erntegut 202 wird dann in Dresch- und Trennzusammenbauten innerhalb des Mähdreschers 10 überführt, wo Korn vom Erntegut 202 getrennt wird. Das erhaltene saubere Korn wird in einem am Mähdrescher 10 angeordneten Korntank gespeichert, bis es zum Abtransport entladen werden kann. Das von Korn verschiedene Restmaterial 206, das aus Stroh und ggf. aus Spreu besteht, wird an der Rückseite 18 des Mähdreschers 10 ausgestoßen. Bevor das Restmaterial jedoch ausgestoßen wird, kann es weiter bearbeitet oder gehäckselt werden und dann über eine weite Fläche hinter dem Mähdrescher 10 durch einen Verteiler 20 verstreut werden. Für größere Verteilbreiten werden üblicherweise Verteiler 20 verwendet, die gegensinnig rotierende Schleuderelemente 24 und 26 oder Flegel umfassen.

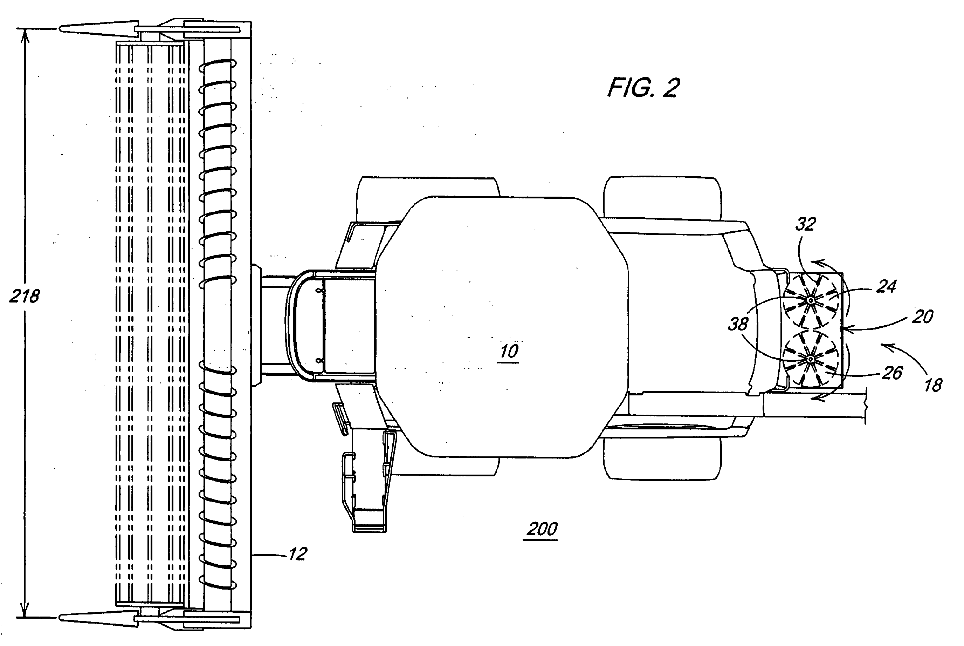

Der in Figur 1 gezeigte Mähdrescher 10 ist mit einem Verteiler 20 des Streuteller-Typs gezeigt, der an der Rückseite 18 angebracht ist. Der Verteiler 20 umfasst ein rechtes Schleuderelement 24 und ein linkes Schleuderelement 26, die um parallele Achsen gegensinnig rotieren, wie in der Figur 2 dargestellt. Die Achsen sind normalerweise im Wesentlichen vertikal angeordnet, können jedoch nach vorn oder hinten geneigt sein, um die Leistung des Verteilers 20 zu optimieren. Die Schleuderelemente 24 und 26 sind in der dargestellten Ausführungsform nach unten hin geöffnet und haben sich nach unten erstreckende Schleuderklingen, die in das Restmaterial 206 eingreifen. Obwohl die vorliegende Erfindung mit acht Schleuderklingen 32 je Schleuderelement 24 und 26 dargestellt ist, haben sich auch andere Anordnungen als befriedigend herausgestellt, einschließlich solcher mit sechs Schleuderklingen 32 pro Schleuderelement 24, 26. Die Schleuderelemente 24 und 26 sind angepasst, Restmaterial 206 von einem Strohhäcksler 34 in einem Fluss aufzunehmen, der näherungsweise parallel zu ihrer Rotationsebene ist, oder von geringfügig darunter. Diese Schleuderelemente werden typischerweise durch hydraulische Motoren 38 angetrieben, sie könnten jedoch auch durch Elektromotoren oder andere mechanische Antriebselemente angetrieben werden. Obwohl nicht zeichnerisch dargestellt, ist anzumerken, dass die vorliegende Erfindung gleichfalls auf fast jeden Typ von Verteilern des Streuteller- oder Flegeltyps anwendbar ist, einschließlich solcher, die Restmaterial von oberhalb oder unterhalb oder in einem sich im Wesentlichen orthogonal zur Ebene der Drehung der Streuteller oder Flegel erstreckenden Fluss erhalten.

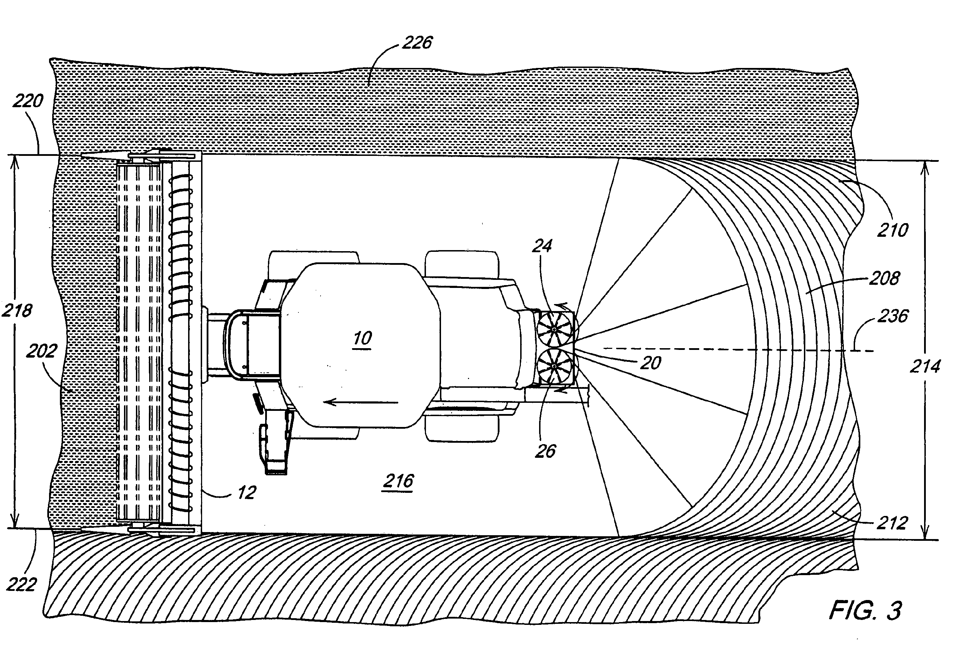

Der Verteiler 20 ist eingerichtet, Restmaterial 206 vom Mähdrescher 10 zu erhalten und es gleichmäßig über eine breite Fläche des Felds 200 hinter dem Mähdrescher 10 zu verteilen, wie in der Figur 3 gezeigt. Im Betrieb wird Restmaterial vom Strohhäcksler 34 in Richtung auf die gegensinnig drehenden Schleuderelemente 24 und 26 ausgestoßen. Die Schleuderelemente 24 und 26 empfangen das Restmaterial 206 und verstreuen es vom Mähdrescher 10 fort nach hinten und außen, um eine gleichmäßige Verteilung 208 des Restmaterials 206 über das Feld 200 zu erzielen. Im Allgemeinen wird die Verteilbreite des Restmaterials 206 auf der rechten Seite 210 des Mähdreschers 10 dem rechten Schleuderelement 24 zugeschrieben und analog wird die Verteilbreite des Restmaterials auf der linken Seite 212 des Mähdreschers 10 dem linken Schleuderelement 26 zugeschrieben. Die Gesamtbreite 214 und der Schwerpunkt 236 der Restmaterialverteilung durch den Verteiler 20 hängt stark von der Drehgeschwindigkeit der Schleuderelemente 24 und 26 ab. Je höher die Drehgeschwindigkeit der Schleuderelemente 24 und 26 ist, um so größer ist die sich ergebende Verteilbreite 214. Je größer der Unterschied in den Drehgeschwindigkeiten zwischen den Verteilern 22 und 24 ist, umso weiter ist der Schwerpunkt 236 von der Mitte hinter dem Mähdrescher 10 entfernt.

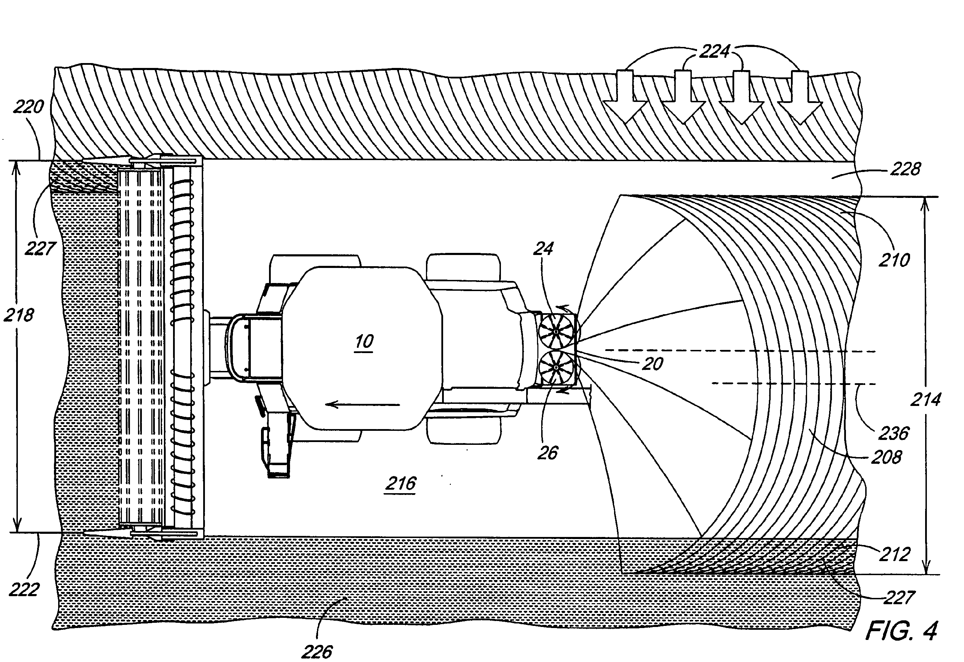

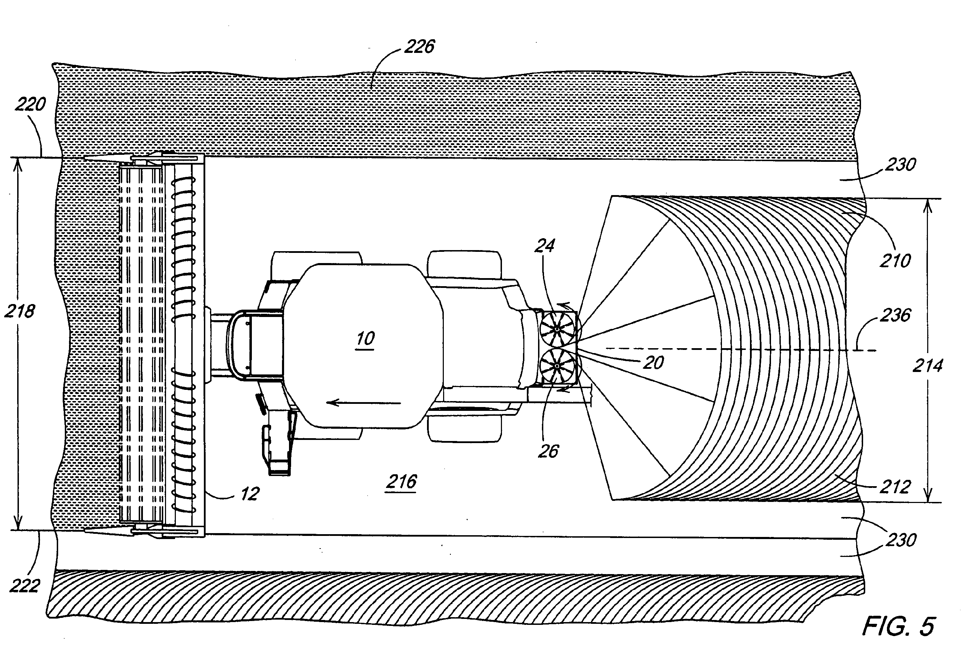

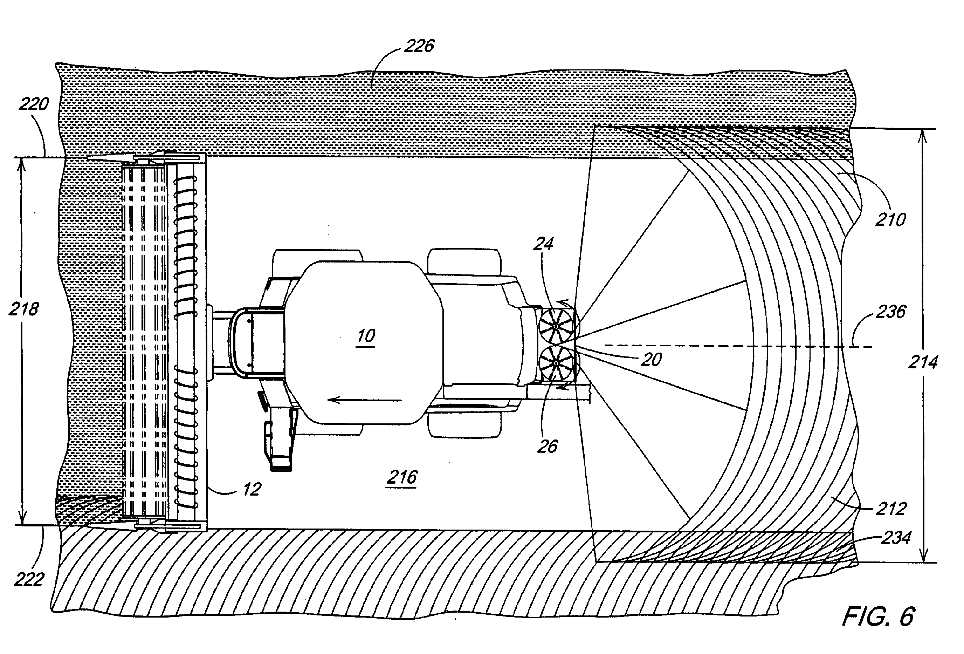

Wenn das Restmaterial 206 durch den Verteiler 20 verstreut wird, ist es wünschenswert, dass es nur den Bereich 216 des Felds überdeckt, den der Mähdrescher 10 gerade abgeschnitten hat, mit einer Breite 214 und einem Schwerpunkt 236, die sich vollständig über eine Schnittbreite 218 des Erntevorsatzes von einer rechten Kante 220 bis zu einer linken Kante 222 erstrecken, wie in der Figur 3 gezeigt. Äußere Bedingungen, wie Seitenwinde 224 und Seitenneigungen können die Lage des Schwerpunktes 236 der Verteilung beeinflussen, was dazu führt, dass Restmaterial 206 in nicht geschnittene Bereiche 226 verteilt wird, was einen Streifen 227 mit ungewünschter Überdeckung zur Folge hat, wie er in der Figur 4 dargestellt ist. Wenn der Mähdrescher 10 zurückkehrt und das Erntegut 202 abschneidet, auf das Restmaterial 206 verstreut wurde, wird das Restmaterial 206 im Streifen 227 entfernt und im Mähdrescher 10 nochmals verarbeitet. Wenn das Restmaterial 206 wieder bei den erwähnten äußeren Bedingungen verstreut wird, wird ein entstehender Streifen 228 des Feldes an der dem Wind oder dem Berg zugewandten Seite des Mähdreschers 10 unbedeckt gelassen. Außerdem können Erntegutbedingungen, wie Art des Ernteguts und der Feuchtigkeitsgehalt, die Verteilbreite 214 des Verteilers 20 beeinflussen. Falls das Erntegut 202 schwerer und nasser ist, müssen sich die Schleuderelemente 24 und 26 schneller drehen, um die ganze Schnittfläche 216 hinter dem Mähderscher 10 abzudecken. Wenn die Verteilbreite 214 nicht aufrecht erhalten wird, können sich Streifen unbedeckten Bodens 230 ergeben, wie in der Figur 5 gezeigt. Umgekehrt kann Restmaterial 206 von leichterem und trockenerem Erntegut 202 weit über die Schnittbreite 216 hinaus verteilt werden, solange sich die Schleuderelemente 24 und 26 nicht langsamer drehen, was Streifen 232 dicker Bedeckung und Streifen 234 dünner Bedeckung zur Folge hat, wie in der Figur 6 dargestellt. Außerdem kann Restmaterial 206 von leichterem und trockenerem Erntegut 202 in der Luft verbleiben, was eine übermäßige Luftverunreinigung zur Folge hat, die schlechte Sichtverhältnisse und eine verminderte Lebensdauer von Luftfiltern an Bord des Mähdreschers 10 bedingt. Es ist daher ein effektives Mittel zur Aufrechterhaltung einer konstanten Verteilweite 214 und eines konstanten Schwerpunkts 236 des Verteilers 20 wünschenswert, die von Umgebungs- und Erntegutbedingungen unabhängig ist.

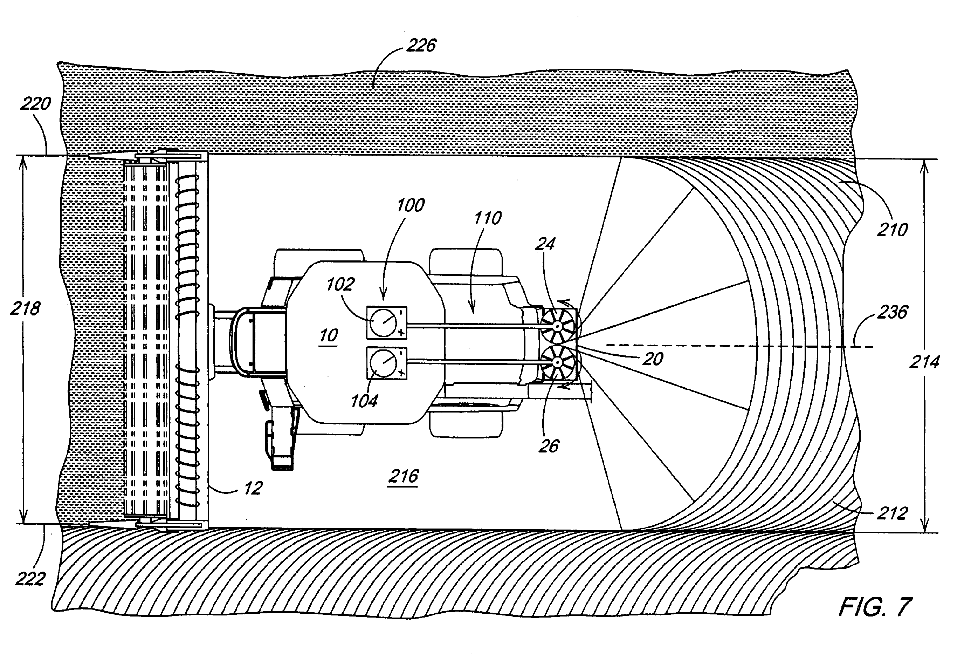

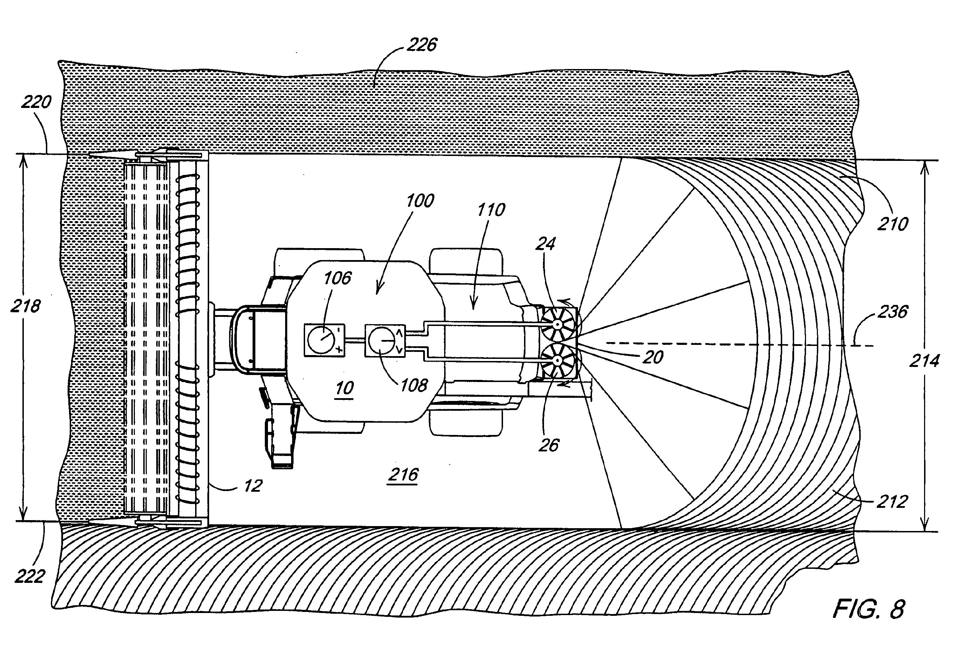

Die vorliegende Erfindung stellt ein effektives Mittel zur Aufrechterhaltung einer konstanten Verteilbreite 214 und eines konstanten Schwerpunkts 236 des Verteilers 20 bereit, indem die Drehgeschwindigkeiten der Schleuderelemente 24 und 26 kontrolliert werden. In einer ersten Ausführungsform, die in den Figuren 7 und 8 dargestellt ist, werden die Drehgeschwindigkeiten der Schleuderelemente 24 und 26 durch einen Bediener von Hand verändert, um eine gewünschte Verteilbreite 214 und einen gewünschten Schwerpunkt 236 aufrecht zu erhalten. Die Verteilbreite 214 kann jede vom Bediener gewünschte Breite sein oder beispielsweise der Schnittbreite 218 des Erntevorsatzes 12 entsprechen. Diese Ausführungsform erfordert zumindest ein Eingabegerät 100, um die Geschwindigkeiten der Schleuderelemente 24 und 26 vorzugeben und einen Steuerzusammenbau 110, um die Geschwindigkeiten der Schleuderelemente 24 und 26 zu kontrollieren. Die Drehgeschwindigkeiten der Schleuderelemente 24 und 26 können entweder einzeln kontrolliert werden, oder in einer alternativen Ausführungsform, gleichförmig mit einem umgekehrten Geschwindigkeitsunterschied zwischen den Schleuderelementen 24 und 26. Die Eingabegeräte 100 könnten mechanische Ventile, elektrische Wahltasten oder digitale Kippschalter sein. Die Eingabegeräte 100 könnten verwendet werden, den Steuerzusammenbau 110 direkt anzuweisen, der die Geschwindigkeiten der Schleuderelemente 24 und 26 kontrolliert, wie in den Figuren 7 und 8 gezeigt, oder sie könnten eingerichtet sein, einem Controller (nicht gezeigt) Signale zu übermitteln, der eingerichtet ist, den Steuerzusammenbau 110 zu kontrollieren. Der die Schleuderelemente 24 und 26 kontrollierende Steuerzusammenbau 110 könnte im Falle durch hydraulische Motoren angetriebener Schleuderelemente 24 und 26 hydraulisch sein, elektrisch im Falle durch Elektromotoren angetriebener Schleuderelemente 24 und 26, wäre jedoch wahrscheinlich elektrohydraulisch, da die Schleuderelemente 24 und 26 in der Regel durch hydraulische Motoren angetrieben und durch elektrische Kontrollzusammenbauten gesteuert werden.

Im Falle einer individuellen Kontrolle der Schleuderelemente 24 und 26, wie sie in der Figur 7 gezeigt wird, überwacht der Bediener die Verteilbreite 214 visuell und passt die Drehgeschwindigkeit der Schleuderelemente 24 und 26 für jede Seite des Mähdreschers 10 unabhängig voneinander an. Wenn der Bediener beispielsweise festgestellt hat, dass die Verteilbreite auf der rechten Seite 210 nicht breit genug war, könnte er die Drehgeschwindigkeit für das rechte Schleuderelement 24 über ein rechtes Eingabegerät 102 steigern, bis eine gewünschte Verteilbreite für diese Seite 210 erreicht ist. Wenn der Bediener analog festgestellt hat, dass die Verteilbreite für die linke Seite 212 nicht groß genug war, könnte er die Drehgeschwindigkeit für das linke Schleuderelement 26 über ein linkes Eingabegerät 104 vergrößern, bis für diese Seite 212 eine gewünschte Verteilbreite erreicht wurde.

In einer geänderten ersten Ausführungsform mit einer gleichförmigen Geschwindigkeitssteuerung der Schleuderelemente 24 und 26 mit einer gegensinnigen Geschwindigkeitsdifferenz zwischen den Schleuderelementen 24 und 26, wie sie in der Figur 8 gezeigt ist, überwacht der Bediener die gesamte Verteilbreite 214 und die Verschiebung des Schwerpunkts 236 in seitlicher Richtung. Wenn die Betriebsbedingungen beispielsweise minimalen Wind und ein flaches Feld 200 wären und der Bediener feststellt, dass die gesamte Verteilbreite 214 zu eng war, könnte er die Drehgeschwindigkeit für beide Schleuderelemente 24 und 26 über ein Breiteneingabegerät 106 vergrößern, bis eine gewünschte Gesamtverteilbreite 214 erreicht wurde. Wenn ein Seitenwind von der rechten Seite her eintreffen würde, so dass der Schwerpunkt 236 der Verteilung bestrebt ist, sich zur linken Seite zu verschieben, wie in der Figur 4 dargestellt, könnte der Bediener dies ausgleichen und den Schwerpunkt 236 wieder zur Mitte zurückbringen, indem er die Drehgeschwindigkeit des linken Schleuderelements 26 verlangsamt und die Drehgeschwindigkeit des rechten Schleuderelements 24 über ein Verschiebungsanweisungseingabegerät 108 umgekehrt proportional zu der des linken Schleuderelements 26 vergrößert.

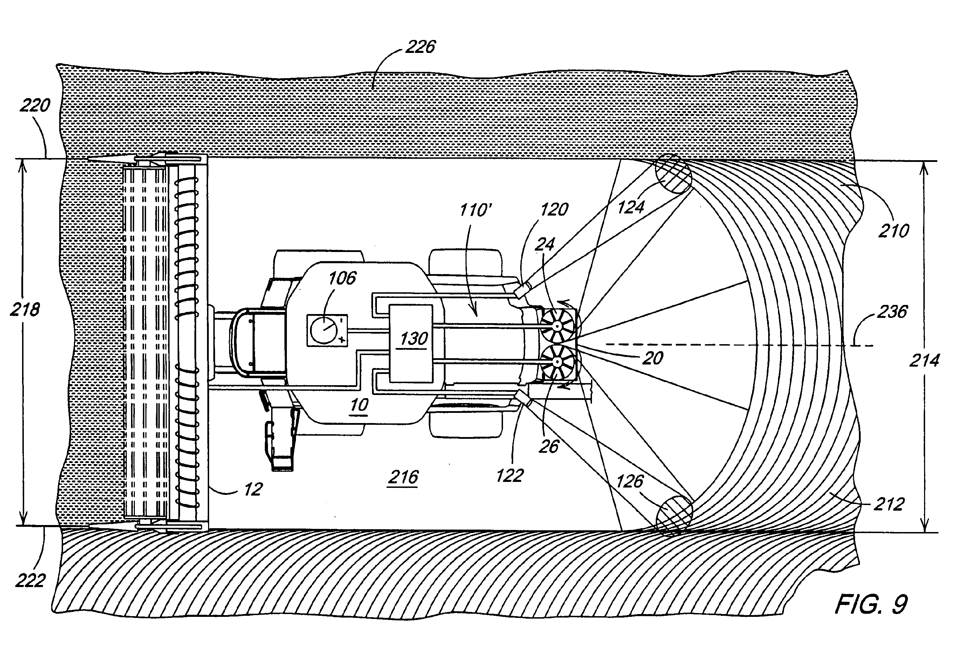

Die Figur 9 zeigt eine zweite Ausführungsform der vorliegenden Erfindung, in der die Drehgeschwindigkeiten der Schleuderelemente 24 und 26 automatisch variiert werden, um eine gewünschte Verteilbreite 214 und einen gewünschten Schwerpunkt 236 durch ein Kontrollsystem aufrecht zu erhalten, das das verstreute Restmaterial 206 direkt überwacht. Diese Ausführungsform erfordert ein oder mehrere Sensoren 120 und 122, um die Verteilbreite 214 zu erfassen, eine Steuerung 130, um die Geschwindigkeiten der Schleuderelemente 24 und 26 basierend auf der Information von den Sensoren 120 und 122 vorzugeben, und einen Steuerzusammenbau 110' wie den oben beschriebenen, um die Geschwindigkeiten der Schleuderelemente 24 und 26 zu kontrollieren. Die Sensoren 120 und 122 können in dieser Ausführungsform elektromagnetische (Laser) oder akustische (Sonar) Sensoren sein. Der die Geschwindigkeiten der Schleuderelemente 24 und 26 kontrollierende Steuerzusammenbau 110' wäre am Wahrscheinlichsten elektrohydraulisch für hydraulisch angetriebene Schleuderelemente 24 und 26, könnte aber auch im Falle elektrisch angetriebener Schleuderelemente 24 und 26 elektrisch sein. Diese Ausführungsform ist ein relativ einfaches System, da es eine geschlossene Rückkopplungsschleife mit Sensoren 120, 122 beinhaltet, der von der Steuerung 130 keine rechnerische Einstellungen erfordert.

Beim Betrieb überwachen die Sensoren 120 und 122 jeweils eine Zielzone 124 und 126 auf jeder Seite des Mähdreschers 10, die jeweils einer Grenze der gewünschten Verteilbreite 214 entspricht, auf das Vorhandensein von verstreutem Restmaterial 206 hin. Die Steuerung 130 passt die Drehgeschwindigkeiten der Schleuderelemente 24 und 26 basierend auf den von den Sensoren 120 und 122 bereitgestellten Informationen an. Falls beispielsweise ein rechter Sensor 120 minimale Restmaterialmengen in seiner Zielzone 124 erfasst, was darauf hinweist, dass die Verteilbreite 214 für die rechte Seite 210 nicht ausreicht, würde die Steuerung 130 die Drehgeschwindigkeit für das rechte Streuelement 24 erhöhen, bis der rechte Sensor 120 Sollwerte für die Menge des erfassten Restmaterials 206 erfasst, was darauf hinweist, dass eine gewünschte Verteilbreite für diese Seite 210 erreicht wurde. Falls analog ein linker Sensor 122 minimale Restmaterialmengen in seiner Zielzone 126 erfasst, was darauf hinweist, dass die Verteilbreite 214 für die linke Seite 212 nicht ausreicht, würde die Steuerung 130 die Drehgeschwindigkeit für das linke Streuelement 24 erhöhen, bis der linke Sensor 122 Sollwerte für die Menge des erfassten Restmaterials 206 erfasst, was darauf hinweist, dass eine gewünschte Verteilbreite für diese Seite 212 erreicht wurde.

Es ist anzumerken, dass die Zielrichtung der Sensoren 120 und 122 in dieser Ausführungsform initialisiert werden müsste, d. h. an die gewünschte Verteilbreite 214 auf beiden Seiten 210 und 212 des Mähdreschers 10 anzupassen wäre. Diese anfängliche Ausrichtung könnte durch den Bediener manuell durchgeführt werden, indem er die Sensoren 120 und 122 während des Betriebs des Systems physisch ausrichtet, bis die gewünschte Verteilbreite 214 erreicht ist. Alternativ könnte ein automatisches Ausrichtungsmittel für die Zielrichtung der Sensoren 120 und 122 verwendet werden, wobei ein Sensor 120 oder 122 durch ein steuerbares Verstellmittel bewegt wird, um eine gewünschte Verteilbreite 214 zu erreichen. Ein Beispiel eines automatischen Zielausrichtungsmittels könnte ein Breiteneingabegerät 106 umfassen, wie es in der ersten Ausführungsform beschrieben wurde, wobei der Bediener eine gewünschte Verteilbreite 214 über das Breiteneingabegerät 106 auswählen würde, die Steuerung 130 würde jedoch die Sensoren 120 und 122 zur richtigen Zielausrichtung basierend auf der Bedienerauswahl bewegen, anstelle die Geschwindigkeiten der Schleuderelemente 24 und 26 durch das Breiteneingabegerät 106 zu kontrollieren. Ein anderes Beispiel eines automatischen Zielausrichtungsmittels könnte zusätzliche Sensoren (nicht gezeigt) umfassen, um die Schnittbreite 218 des Erntevorsatzes 12 zu erfassen, wobei die Steuerung 130 die Sensoren 120 und 122 in die richtige Ausrichtung bewegt, so dass die Verteilbreite 214 an die Schnittbreite 218 angepasst wird. Die Feststellung der Schnittbreite 218 des Erntevorsatzes 12 kann durch Kommunikation zwischen der Steuerung 130 und dem Erntevorsatz 12 erfolgen, oder durch zusätzliche Sensoren (nicht gezeigt), die angepasst sind, geschnittene und ungeschnittene Regionen 216 und 226 zu vergleichen und die Lage der rechten Kante 220 und der linken Kante 222 der Schnittbreite 218 des Erntevorsatzes 12 festzustellen. Die oben beschriebenen Beispiele können weiter kombiniert werden, so dass der Bediener eine Verteilbreite 214 auswählen kann, die um einen gewünschten Wert von der Schnittbreite 218 des Erntevorsatzes 12 abweicht.

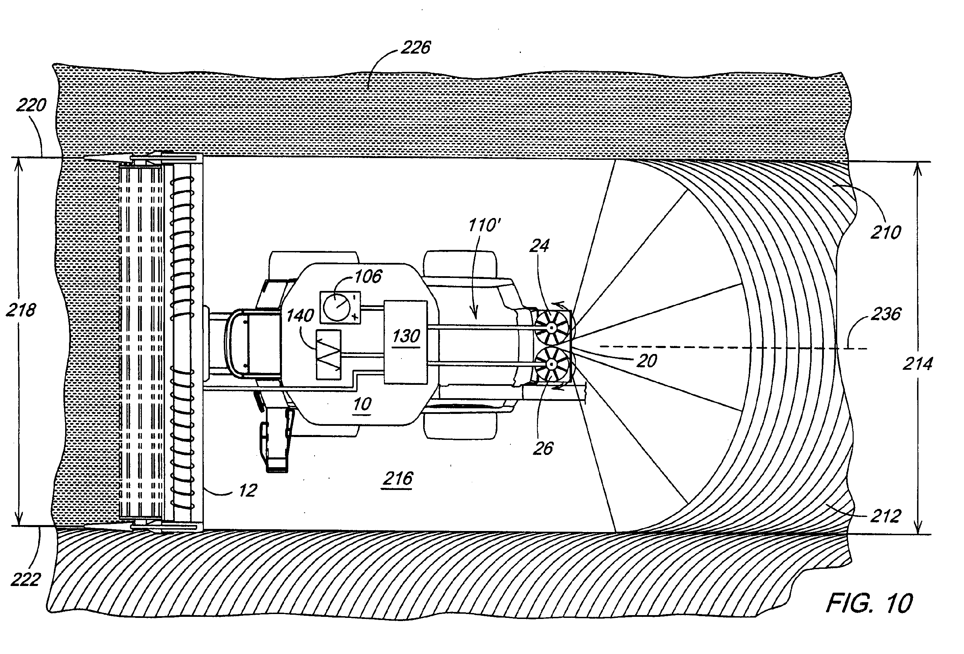

Die Figur 10 stellt eine dritte Ausführungsform der vorliegenden Erfindung dar, in der die Drehgeschwindigkeiten der Schleuderelemente 24 und 26 automatisch verändert werden, um einen gewünschten Schwerpunkt der Verteilung durch ein Kontrollsystem aufrecht zu erhalten, das Umgebungsbedingungen überwacht. Diese Ausführungsform erfordert einen oder mehrere Sensoren 140, um Umgebungsbedingungen zu erfassen, eine Steuerung 130, um die Drehgeschwindigkeiten der Schleuderelemente 24 und 26 basierend auf Informationen vom Sensor 140 und gespeicherten Daten vorzugeben, und einen Steuerzusammenbau 110', wie er oben beschrieben wurde, um die Geschwindigkeiten der Schleuderelemente 24 und 26 zu kontrollieren. Bei dieser Ausführungsform können die Sensoren 140 Sensoren zur Erfassung der Seitenwindgeschwindigkeit (Anemometer) und/oder einen Sensor zur Erfassung der seitlichen Neigung des Mähdreschers 10 umfassen. Wie bei der zweiten Ausführungsform wäre der die Geschwindigkeiten der Schleuderelemente 24 und 26 kontrollierende Steuerzusammenbau 110' am Wahrscheinlichsten elektrohydraulisch für hydraulisch angetriebene Schleuderelemente 24 und 26, könnte aber auch im Falle elektrisch angetriebener Schleuderelemente 24 und 26 elektrisch sein.

Beim Betrieb würden die Sensoren 140 den Seitenwind und/oder die Neigung des Geländes erfassen, auf dem der Mähdrescher 10 arbeitet. Die Steuerung 130 würde dann basierend auf den erfassten Bedingungen einen erforderlichen Ausgleich berechnen und die Geschwindigkeiten der Schleuderelemente 24 und 26 anpassen, um einen Schwerpunkt 236 der Verteilung mittig hinter dem Mähdrescher 10 aufrecht zu erhalten. Wenn beispielsweise ein Anemometer einen Seitenwind 224 von der rechten Seite erfasst, was darauf hinweist, dass sich der Schwerpunkt 236 zur linken Seite hin verschiebt, wie in der Figur 4 dargestellt, würde die Steuerung 130 die geeignete Geschwindigkeit für die Schleuderelemente 24, 26 berechnen, um den Schwerpunkt 236 zurück zur Mitte zu bringen, indem die Drehgeschwindigkeit des rechten Schleuderelements 24 angehoben und die Drehgeschwindigkeit des linken Schleuderelements 26 abgesenkt wird. Falls analog ein Neigungsmesser (nicht gezeigt) eine Seitenneigung zur rechten Seite hin erfasst, was darauf hinweist, dass sich der Schwerpunkt 236 zur linken Seite hin verschiebt, wie in der Figur 4 dargestellt, würde die Steuerung 130 die geeignete Geschwindigkeit für die Schleuderelemente 24, 26 berechnen, um den Schwerpunkt 236 zurück zur Mitte zu bringen, indem die Drehgeschwindigkeit des rechten Schleuderelements 24 angehoben und die Drehgeschwindigkeit des linken Schleuderelements 26 abgesenkt wird.

Es ist anzumerken, das die dritte Ausführungsform ein System mit offener Kontrollschleife ist, das den Schwerpunkt 236 nicht direkt erfasst und die Verwendung von Rechnungsformeln und/oder Tabellen durch die Steuerung 130 sinnvoll macht, um geeignete Geschwindigkeiten für die Schleuderelemente 24 und 26 zu berechnen. Außerdem erfordert diese Ausführungsform ein zusätzliches Verfahren zur Feststellung der gesamten Verteilbreite 214, das durch den Bediener erfolgen könnte, wie in der ersten Ausführungsform beschrieben, oder automatisch, wobei die Steuerung 130 die Gesamtgeschwindigkeiten der Schleuderelemente 24 und 26 basierend auf der Schnittbreite 218 des Erntevorsatzes 12 und der Art des Ernteguts berechnet und kontrolliert. Die Feststellung der Schnittbreite 218 des Erntevorsatzes 12 und der Art des Ernteguts kann durch Kommunikation zwischen dem Erntevorsatz und der Steuerung 130 erfolgen.

Schließlich ist es wichtig anzumerken, dass die Elemente der ersten, zweiten und dritten Ausführungsformen auf unterschiedliche Arten weiter kombiniert oder verwendet werden können als in der obigen Diskussion erwähnt. Beispielsweise könnte der Neigungsmesser der dritten Ausführungsform verwendet werden, um der Steuerung 130 Informationen bereitzustellen, so dass die Steuerung 130 die Sensoren 120 und 122 für die Verteilbreite der zweiten Ausführungsform nach oben oder unten bewegen könnte zwecks optimaler Ausrichtung auf den Erdboden. In einem anderen Beispiel könnten die Sensoren 120, 122 der zweiten Ausführungsform auch als Sensoren verwendet werden, die eingerichtet sind, die geschnittenen Bereiche 216 und ungeschnittenen Bereiche 226 zu vergleichen, um den Ort der rechten Kante 220 und der linken Kante 222 der Schnittbreite 218 des Erntevorsatzes 12 in derselben Ausführungsform festzustellen. Wie beschrieben, würden die Verteilbreitensensoren 120 und 122 in der zweiten Ausführungsform der Steuerung 130 Eingaben zu ihrer eigenen Ausrichtung bereitstellen.

## Patentansprüche

1. Mähdrescher (10) mit einem Erntevorsatz (12) zum Aufnehmen von Erntegut von einem Feld, Dresch- und Trennzusammenbauten, die im aufgenommenen Erntegut enthaltenes Korn von Erntegutresten (206) trennen, einem mit veränderbarer Geschwindigkeit in Drehung versetzbaren rechten Schleuderelement (24), das eingerichtet ist, Erntegutreste (206) zu erhalten und mit einer von seiner Drehgeschwindigkeit abhängigen Weite an der in Fahrtrichtung rechten Seite (210) des Mähdreschers (10) auf das Feld abzugeben, und mit einem mit veränderbarer Geschwindigkeit in Drehung versetzbaren linken Schleuderelement (26), das eingerichtet ist, Erntegutreste (206) zu erhalten und mit einer von seiner Drehgeschwindigkeit abhängigen Weite an der in Fahrtrichtung linken Seite (212) des Mähdreschers (10) auf das Feld abzugeben, wobei die Drehgeschwindigkeiten der Schleuderelemente (24) durch einen Steuerzusammenbau (110, 110') getrennt einstellbar sind, **dadurch gekennzeichnet, dass** der Steuerzusammenbau (110, 110') mit einer Steuerung (130) verbunden ist, die betreibbar ist, die Drehgeschwindigkeit der Schleuderelemente (24, 26) basierend auf Sensoren (120, 122) zur Überwachung der Zielzonen (124, 126) der Schleuderelemente (24, 26) oder Sensoren (140) zur Erfassung von Umgebungsbedingungen automatisch derart zu variieren, dass eine auf der Schnittbreite (218) des Erntevorsatzes (12) basierende, gewünschte Verteilbreite (214) erzielt wird, und dass die Schnittbreite (218) des Erntevorsatzes (12) durch Kommunikation zwischen der Steuerung (130) und dem Erntevorsatz (12) oder bei Verwendung von Sensoren (120, 122) zur Überwachung der Zielzonen (124, 126) der Schleuderelemente (24, 26) durch Sensoren zur Erfassung der Schnittbreite (218) des Erntevorsatzes (12) feststellbar ist.

2. Mähdrescher (10) nach Anspruch 1, **dadurch gekennzeichnet, dass** die Steuerung (130) mit einem Sensor (120, 122) verbunden ist, der eingerichtet ist, die Menge in einer Zielzone (124, 126) eintreffender Erntegutreste (206) zu erfassen, und dass die Steuerung (130) betreibbar ist, den Ausgangswert des Sensors (120, 122) mit einem Sollwert zu vergleichen und den Steuerzusammenbau (110') abhängig vom Ergebnis des Vergleichs anzusteuern.

3. Mähdrescher (10) nach Anspruch 2, **dadurch gekennzeichnet, dass** der Sensor (120, 122) ein akustischer oder ein elektromagnetischer Sensor ist.

4. Mähdrescher (10) nach einem der Ansprüche 2 oder 3, **dadurch gekennzeichnet, dass** die Zielzone (124, 126) selbsttätig bestimmt wird.

5. Mähdrescher nach Anspruch 1, **dadurch gekennzeichnet, dass** die Steuerung (130) wiederum mit einem Sensor (140) verbunden ist, der zur Erfassung von Umgebungsbedingungen, wie der Seitenhangneigung und/oder der Seitenwindstärke eingerichtet ist, und dass die Steuerung (130) betreibbar ist, anhand des Ausgangswerts des Sensors (120, 122) den Steuerzusammenbau (110') derart anzusteuern, dass die Erntegutreste (206) innerhalb der Arbeitsbreite (218) des Erntevorsatzes (12) verteilt werden.

## Claims

1. Combine harvester (10) comprising a front-mounted harvesting attachment (12) for the reception of crop from a field, threshing and separating assemblies, which separate grain contained in the received crop from crop residues (206), a right-hand centrifugal element (24), which can be set in rotation at variable speed and which is set up to receive crop residues (206) and deliver them to the field with an expanse, dependent on its rotational speed, on the - in the direction of travel - right-hand side (210) of the combine harvester (10), and comprising a left-hand centrifugal element (26), which can be set in rotation at variable speed and which is set up to receive crop residues (206) and deliver them to the field with an expanse, dependent on its rotational speed, on the - in the direction of travel - left-hand side (212) of the combine harvester (10), the rotational speeds of the centrifugal elements (24) being separately adjustable by a control assembly (110, 110'), **characterized in that** the control assembly (110, 110') is connected to a control system (130), which can be operated to vary the rotation speed of the centrifugal elements (24, 26), on the basis of sensors (120, 122) for monitoring the target zones (124, 126) of the centrifugal elements (24, 26) or sensors (140) for the detection of environmental conditions, automatically in such a way that a desired distribution width (214) based on the cutting width (218) of the front-mounted harvesting attachment (12), is obtained, and **in that** the cutting width (218) of the front-mounted harvesting attachment (12) can be ascertained by communication between the control system (130) and the front-mounted harvesting attachment (12) or, if sensors (120, 122) for monitoring the target zones (124, 126) of the centrifugal elements (24, 26) are used, by sensors for detecting the cutting width (218) of the front-mounted harvesting attachment (12).

2. Combine harvester (10) according to Claim 1, **characterized in that** the control system (130) is connected to a sensor (120, 122), which is set up to detect the quantity in a target zone (124, 126) of arriving crop residues (206), and **in that** the control system (130) can be operated to compare the initial value of the sensor (120, 122) with a desired value and to control the control assembly (110') in dependence on the result of the comparison.

3. Combine harvester (10) according to Claim 2, **characterized in that** the sensor (120, 122) is an acoustic or an electromagnetic sensor.

4. Combine harvester (10) according to one of Claims 2 or 3, **characterized in that** the target zone (124, 126) is determined automatically.

5. Combine harvester according to Claim 1, **characterized in that** the control system (130) is, in turn, connected to a sensor (140), which is set up to detect environmental conditions, such as the side slope inclination and/or the cross-wind strength, and **in that** the control system (130) can be operated to control the control assembly (110'), on the basis of the initial value of the sensor (120, 122), in such a way that the crop residues (206) are distributed within the working width (218) of the front-mounted harvesting attachment (12).

## Revendications

1. Moissonneuse-batteuse (10) avec un accessoire avant de récolte (12) pour recueillir la récolte d'un ensemble de moissonnage, battage et séparation, qui sépare le grain contenu dans la récolte des restes de récolte (206), un élément de projection (24) de droite pouvant être mis en rotation à vitesse variable (24), qui est conçu pour obtenir les restes de récolte (206) et les remettre sur le champ, à une distance dépendant de sa vitesse de rotation, du côté droit (210) dans le sens de la marche de la moissonneuse-batteuse (10), et un élément de projection (26) de gauche pouvant être mis en rotation à vitesse variable (24), qui est conçu pour obtenir les restes de récolte (206) et les remettre sur le champ, à une distance dépendant de sa vitesse de rotation, du côté gauche (212) dans le sens de la marche de la moissonneuse-batteuse (10), les vitesses de rotation des éléments de projection (24) étant réglables séparément par un ensemble de commande (110, 110'), **caractérisée en ce que** l'ensemble de commande (110, 110') est relié à une commande (130) qui peut être exploitée pour faire varier automatiquement la vitesse de rotation des éléments de projection (24, 26) sur base de capteurs (120, 122) pour la surveillance des zones cibles (124, 126) des éléments de projection (24, 26) ou de capteurs (140) pour la détection de conditions d'environnement de façon à réaliser une largeur de répartition (214) désirée basée sur la largeur de coupe (218) de l'accessoire avant de récolte (12) et **en ce que** la largeur de coupe (218) de l'accessoire avant de récolte (12) peut être déterminée par la communication entre la commande (130) et l'accessoire avant de récolte (12) ou par l'utilisation de capteurs (120, 122) pour la surveillance des zones cibles (124, 126) des éléments de projection (24, 26) par des capteurs pour la détection de la largeur de coupe (218) de l'accessoire avant de récolte (12).

2. Moissonneuse-batteuse (10) suivant la revendication 1, **caractérisée en ce que** la commande (130) est reliée à un capteur (120, 122) qui est conçu pour détecter la quantité de restes de récolte (206) arrivant dans une zone cible (124, 126) et **en ce que** la commande (130) peut être exploitée pour comparer la valeur de sortie du capteur (120, 122) avec une valeur de consigne et commander l'ensemble de commande (110') en fonction du résultat de la comparaison.

3. Moissonneuse-batteuse suivant la revendication 2, **caractérisée en ce que** le capteur (120, 122) est un capteur acoustique ou électromagnétique.

4. Moissonneuse-batteuse (10) suivant l'une des revendications 2 ou 3, **caractérisée en ce que** la zone cible (124, 126) est déterminée automatiquement.

5. Moissonneuse-batteuse suivant la revendication 1, **caractérisée en ce que** la commande (130) est elle-même reliée à un capteur (140) qui est conçu pour la détection de conditions d'environnement, telles que la pente latérale de talus et/ou la force du vent latéral et **en ce que** la commande (130) peut être exploitée pour commander l'ensemble de commande (110') en fonction de la valeur de sortie du capteur (120, 122) de telle façon que les restes de récolte (206) soient répartis à l'intérieur de la largeur de travail (218) de l'accessoire avant de récolte (12).
